# EUROPEAN PATENT SPECIFICATION

(11) **EP 3 867 290 B1**
(45) Date of publication and mention of the grant of the patent: **27.09.2023**
(21) Application number: 19783574.7
(22) Date of filing: 15.10.2019
(51) Int. Cl.: C08F 285/00, C08F 265/06, C08F 222/10, C08J 5/04, C08J 5/24, C08K 5/00, C08L 51/00, C08F 220/06

(54) **COMPOSITION FOR (METH) ACRYLIC POLYMERIC COMPOSITIONS AND COMPOSITES, ITS METHOD OF PREPARATION AND USE**
ZUSAMMENSETZUNG FÜR (METH)ACRYLPOLYMERE ZUSAMMENSETZUNGEN UND VERBUNDWERKSTOFFE, VERFAHREN ZU IHRER HERSTELLUNG UND IHRE VERWENDUNG
COMPOSITION POUR COMPOSITIONS POLYMÈRES (MÉTH) ACRYLIQUES ET COMPOSITES, SON PROCÉDÉ DE PRÉPARATION ET D'UTILISATION

(30) Priority: 15.10.2018 FR 1859533
(43) Date of publication of application: 25.08.2021
(73) Proprietor: ARKEMA FRANCE, 92700 Colombes (FR)
(72) Inventor: GERARD, Pierre, 64170 Lacq (FR)
(74) Representative: Arkema Patent
(86) International application number: PCT/EP2019/077940
(87) International publication number: WO 2020/078991

(56) References cited:
- WO-A1-2016/102899
- WO-A1-2018/178556
- JP-A- H09 111 085
- JP-A- 2011 173 969
- US-A1- 2003 104 743

## Description

### [Field of the invention]

The present invention relates to a (meth)acrylic composition suitable for (meth)acrylic polymeric compositions and composites, its method of preparation and its use.

In particular the present invention relates to a (meth)acrylic composition that possesses once polymerized a certain heat resistance and that is suitable for (meth)acrylic composites used at higher temperatures.

More particularly the present invention relates to a (meth)acrylic composition suitable for preparing (meth)acrylic polymeric compositions and composites.

The present invention also relates also to a method for the preparation of such a (meth)acrylic composition and its use, but also (meth)acrylic polymeric compositions and composites prepared from such a (meth)acrylic composition.

### [Technical problem]

Compositions comprising (meth)acrylic polymers are widely used. This is mainly due to the characteristic that these polymers are highly transparent polymer materials with excellent resistance to ultraviolet radiation and weathering. However (meth)acrylic polymers are also used in applications where the transparency is not necessarily required, as for example in composites.

A composite material is a macroscopic combination of two or more non miscible materials. The composite material constitutes at least of a matrix material that forms a continuous phase for the cohesion of the structure and a reinforcing material with various architectures for the mechanical properties.

The aim in using composite materials is to achieve a performance from the composite material that is not available from its separate constituents if used alone. Consequently composite materials are widely used in several industrial sectors as for example building, automotive, aerospace, transport, leisure, electronics, and sport notably due to their better mechanical performance (higher tensile strength, higher tensile modulus, higher fracture toughness) in comparison with homogenous materials and their low density.

The most important class in view of volume in commercial industrial scale, are composites with organic matrices, where the matrix material is a generally polymer. The principal matrix or continuous phase of a polymeric composite material is either a thermoplastic polymer or a thermosetting polymer.

Thermosetting polymers consist of crosslinked three dimensional structures. The crosslinking is obtained by curing reactive groups inside the so called prepolymer. Curing for example can be obtained by heating the polymer chains in order to crosslink and harden the material permanently. In order to prepare the polymeric composite material the prepolymer is mixed with the other component (for example glass beads for a particulate composite or short fibers for a fibrous composite) or the other component is wetted or impregnated (for example woven nets) and cured afterwards.

Examples for prepolymers or matrix material for thermoset polymers are unsatured polyesters, vinylesters, epoxy or phenolic ones. This manufacturing of the semi-fabricated products yields to the so called prepregs

A disadvantage of a thermoset polymer matrix is its very high crosslinkage. The matrix cannot be easily shaped in other forms. Once the polymer has been cured the form is fixed.

Thermoplastic polymers consist of or compromise linear or branched polymer chaines,. The thermoplastic polymers are heated in order to mix the two constituents necessary for producing the composite material and to be cooled for setting. One limit in using these thermoplastic polymers for the fabrication of composite materials is their high viscosity in the molten state. The wetting or correct impregnation of the fibers by the thermoplastic polymer can only be achieved, if the thermoplastic resin is sufficiently fluid. In order to have a low viscosity or sufficient fluidity of the thermoplastic polymer the chain length (molecular mass) can be reduced. However a too low molecular weight has a negative impact on the performance of the composite material especially the mechanical properties. On the other hand the temperature of the thermoplastic polymer could be increased in order to reduce the viscosity in an important way. Consequently the continuous working temperature is relatively high, above 200°C, influencing directly the economics (costs) of the composite material due to implication of high energy costs. Additionally thermoplastic polymers tend to degrade if the temperature is very high, which is especially true for semicrystalline thermoplastic polymers that have high melting points as for example polyamides (for example PA6.6), polyethersulfon (PES), polyetherimid (PEI), polyetheretherketon (PEEK) or polyphenylene sulfide (PPS). This thermo induced degradation yields to a decreasing molecular weight of the polymer matrix important for the cohesion of the composite material.

Another way for impregnating the fibrous substrate is to dissolve the thermoplastic polymer in an organic solvent. However this method requires a lot of solvent that has to be evaporated. There are environmental issues in using large quantities of solvent in term of energy and pollution.

Still another way for preparing a polymeric composite material based on thermoplastic polymer is a thermoplastic polymer resin comprising a monomer, commonly known as a "syrup".The syrup is used to blend with or impregnate the reinforcing material, for example an filler or a fibrous substrate. Once polymerized the monomer has been polymerized, the thermoplastic polymeric resin constitutes the matrix of the composite material. At the time of blending or impregnation, when preparing polymeric composites, the viscosity of the impregnation syrup must be controlled and adapted so as not to be too fluid or too viscous, so as to achieve a homogenous blend or impregnate correctly each fibre of the fibrous substrate. When the wetting is partial, depending on whether the syrup is too fluid or too viscous, "naked" zones, i.e. non-impregnated zones, and zones in which drops of polymer form on the fibres, which are the cause of the creation of bubbles, respectively appear. These "naked" zones and these bubbles give rise to the appearance of defects in the final composite material, which are the cause, inter alia, of a loss of mechanical strength of the final composite material. However the viscosity range useful for the impregnation is low for stocking such material.

A disadvantage for the preparation of thermoplastic composite with fibrous reinforcements from a syrup is the degradation of the polymer when the composite is used at higher temperature.

There is a need of a polymeric composition that provides a high thermal resistance and aging resistance at higher temperatures.

There is also a need of a polymeric composition that provides a high thermal resistance and aging resistance at higher temperatures as continuous phase in polymeric composites.

The objective of the present invention is to have a composition for preparing a (meth)acrylic polymeric compositions with a high thermal resistance and aging resistance at increased temperatures.

The objective of the present invention is also to have a composition for preparing a (meth)acrylic composites composition with a high thermal resistance an aging resistance at increased temperatures.

High thermal resistance in the present invention signifies a weight loss of the composite composition at a temperature of above 130°C. The weight loss shall be reduced over a period of for example 2000 hours of exposure to high temperature and preferably the weight loss of the polymeric part at a temperature of 150°C shall be less than 50% over a period of 2000 hours.

The further objective of the present invention is to have a (meth)acrylic composition for (meth)acrylic polymeric compositions or for preparing a (meth)acrylic composite composition with a high thermal resistance. High thermal resistance in the present invention signifies also that cracking is avoided or at least strongly reduced.

Another objective of the present invention is to provide a process for preparing a (meth)acrylic composition for (meth)acrylic polymeric compositions or for preparing a (meth)acrylic composite composition with a high thermal resistance.

Still another objective of the present invention is to have a method for preparing a (meth)acrylic composite composition with a high thermal resistance.

### [BACKGROUND OF THE INVENTION ]Prior art

The document WO2013/056845 discloses a composite material via in-situ polymerization of thermoplastic (meth)acrylic resins. The polymeric composite material obtained by in-situ polymerization of a thermoplastic (meth)acrylic resin and a fibrous material containing long fibers and its use, a process for making such a composite material and mmanufactured mechanical or structured part or article comprising this polymeric composite material. The polymerization uses a radical initiator chosen from diacyl peroxides, peroxy esters, dialkyl peroxides, peroxyacetals or azo compounds. The document does not disclose anything about the obtained polymeric composite composition and its aging resistance especially at elevated temperatures..

The document WO2014/013028 an impregnation process for a fibrous substrate, a liquid (meth) acrylic syrup for the impregnation process, its method of polymerization and structured article obtained thereof. The liquid (meth) acrylic syrup comprises a (meth)acrylic polymer, a (meth)acrylic monomer and at least one initiator or initiating system for starting the polymerization of the (meth) acrylic monomer. The initiators or initiating systems that are activated by heat. The document does not disclose anything about the polymeric composite composition and its aging resistance especially at elevated temperatures..

The document WO2014/174098 discloses a liquid (meth) acrylic syrup its method of polymerization, use and molded article obtained thereof. The liquid (meth) acrylic syrup comprises an initiation system for polymerization at low temperature said initiating system comprises at least one accelerator, at least one organic aldehyde, at least one peracid and at least one liquid peroxy compound. The document does not disclose anything about the polymeric composite composition and its aging resistance especially at elevated temperatures.

WO2018/178556A1 describes a methacrylic composition comprising 100 parts by weight of a viscous liquid (meth)acrylic syrup comprising 25 parts by weight of PMMA, 75 parts by weight of MMA, a crosslinking agent comprising at least two (meth)acrylic functions in proportions of 0,5 phr, 2 phr, 5 phr and 10 phr. It also describes a method of impregnating a fibrous substrate with said syrup, a composite material obtained after polymerization of said impregnating syrup and the use of said composite material.

All the prior art documents do not disclose a (meth) acrylic composition suitable for (meth)acrylic polymeric compositions or composites that have improved heat aging properties.

### [Brief description of the invention]

Surprisingly it has been found that a (meth) acrylic composition MC1 comprising:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) from 0.01 to 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid;
allows to provide a composition for the preparation of (meth)acrylic polymers or composites that possess a better heat aging resistance than a composition or composite not comprising the component b).

Surprisingly it has also been found that a (meth) acrylic composition MC1 comprising:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth) acrylic monomer (M1), characterized in that the (meth)acrylic monomer (M3) is chosen from methacrylic acid; allows to provide a composition for the preparation of (meth)acrylic polymers or composites that possess a better heat aging resistance than a composition or composite not comprising the components b) and c).

Surprisingly it has also been discovered that a (meth)acrylic composition MC1 comprising:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) from 0.01 to 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid;
can be used to increase the heat aging resistance of a polymer or polymeric composite made from that composition as compared to a composition not comprising the component b).

Surprisingly it has also been discovered that method for preparing a (meth)acrylic polymeric compositions or for preparing a (meth)acrylic composite composition, said method comprises the steps of:
i)providing a (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 10phr by weight of a (meth)acrylic monomer (M2) comprising at least two (meth)acrylic functions;
   c) from 0.01 to 10phr by weight of a (meth)acrylic monomer (M3)
   comprising only one (meth)acrylic function and the (meth)acrylic monomer (M3) is different from (meth)acrylic monomer, characterized in that the (meth)acrylic monomer (M3) is chosen from methacrylic acid
ii)polymerizing said (meth)acrylic composition MC1 yields to a composition of (meth)acrylic polymers or composites that possess a better heat aging resistance as compared to a composition or composite not comprising the component b).

### [Detailed description of the invention]

According to a first aspect, the present invention relates to a (meth)acrylic composition (MC1) comprising:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth) acrylic monomer (M1), characterized in that the (meth)acrylic monomer (M3) is chosen from methacrylic acid;
d) from 0phr and 10phr by weight of a metal containing compound;
e) from 0phr and 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3) ;
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler.

According to a second aspect the present invention relates to a method for preparing a (meth)acrylic composition mentioned previously comprising following steps:
i) providing the following components
   a) a (meth)acrylic polymer (P1) and a (meth)acrylic monomer (M1) comprising only one (meth)acrylic function
   b) a (meth)acrylic monomer (M2) comprising at least two (meth)acrylic functions
   c) a (meth) acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
ii) mixing the components a) to c).

According to a third aspect the present invention relates to use of a (meth)acrylic composition MC1 to impregnate a fibrous substrate, said meth)acrylic composition MC1 comprises:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
d) from 0phr and 10phr by weight of a metal containing compound;
e) from 0phr and 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3) ;
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler.

According to a fourth aspect the present invention relates to use of a (meth)acrylic composition MC1 to prepare (meth)acrylic polymeric composition, said (meth)acrylic composition MC1 comprises:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
d) from 0phr and 10phr by weight of a metal containing compound;
e) from 0phr and 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3) ;
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler.

According to a fifth aspect the present the present invention relates to a method for preparing a polymeric composite from a (meth)acrylic composition MC1, said method comprises the following steps:
i) impregnating a fibrous substrate with a (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 10phr by weight of a (meth)acrylic monomer (M2) comprising at least two (meth)acrylic functions;
   c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid;
   d) from 0phr and 10phr by weight of a metal containing compound;
   e) from 0phr and 10phr by weight of a reducing agent
   f) from 0ppm and 20 000ppm of a tertiary amine;
   g) from 0.1phr and 5phr of a initiator to start the polymerization of the (meth)acrylic monomers (M1), (M2) and (M3) ;
   h) from 0ppm to 10 000ppm of a transfer agent;
   i) from 0ppm to 10 000ppm of an antioxidant;
   j) from 0ppm to 1 000ppm a radical scavenger;
   k) from 0ppm to 10 000ppm of a thermal stabilizing agent and
   l) from 0ppm to 10 000ppm of a HALS
   m) optionally an inorganic filler.
ii) polymerizing the (meth)acrylic composition MC1.

By the term "(meth) acrylic" as used is denoted any kind of acrylic and methacrylic monomers.

By the term "PMMA" as used are denoted homo- and copolymers of methylmethacrylate (MMA), for the copolymer of MMA the weight ratio of MMA inside the PMMA is at least 70 wt%.

By the term "monomer" as used is denoted is a molecule which can under go polymerization.

By the term "polymerization" as used is denoted the process of converting a monomer or a mixture of monomers into a polymer.

By the term "thermoplastic polymer" as used is denoted a polymer that turns to a liquid or becomes more liquid or less viscous when heated and that can take on new shapes by the application of heat and pressure. This applies also for slightly crosslinked thermoplastic polymers that can be thermoformed when heated above the softening temperature.

By the term "thermosetting polymer" as used is denoted a prepolymer in a soft, solid or viscous state that changes irreversibly into an infusible, insoluble polymer network by curing.

By the term "prepreg" as used are denoted composition of a fibrous substrate that have been impregnated with a curable prepolymer, or liquid reactants or a thermoplastic and can be further polymerized.

By the term "prepolymer" as used is denoted a polymer or oligomer whose molecules are capable of entering, through reactive groups, into further polymerization.

By the term "oligomer" as used is denoted a polymeric molecule of intermediate relative molecular mass, comprising between 5 and 500 monomer units.

By the term "polymer composite" as used is denoted a multicomponent material comprising multiple different phase domains in which at least one type of phase domain is a continuous phase and in which at least one component is a polymer.

By the term "initiator" as used is denoted a chemical species that forms compound or an intermediate compound that starts the polymerization of a monomer, that to capable of linking successively with a large number of other monomers into a polymeric compound.

By the abbreviation "phr" is meant weight parts per hundred parts of composition. For example 1phr of initiator in the composition means that 1kg of initiator is added to 100kg of composition.

By the abbreviation "ppm" is meant weight parts per million parts of composition. For example 1000ppm of a compound in the composition means that 0.1kg of compound is present in 100kg of composition.

By saying that a range from x to y in the present invention, it is meant that the upper and lower limit of this range are included, equivalent to at least x and up to y.

By saying that a range is between x and y in the present invention, it is meant that the upper and lower limit of this range are excluded, equivalent to more than x and less than y.

The liquid composition a) or (meth)acrylic syrup according to the invention comprises a (meth)acrylic polymer (P1), a (meth)acrylic monomer (M1).

The liquid (meth)acrylic syrup according to the invention comprises between 10wt% and 50wt% of a (meth)acrylic polymer (P1) and between 50wt% and 90wt% of a (meth)acrylic monomer (M1). Preferably the liquid (meth)acrylic syrup comprises between 10wt% and 40wt% of a (meth)acrylic polymer (P1) and between 60wt% and 90wt% of a (meth)acrylic monomer (M1); and more preferably between 10wt% and 30wt% of a (meth)acrylic polymer (P1) and between 70wt% and 90wt% of a (meth)acrylic monomer (M1).

The dynamic viscosity of the liquid composition a) or (meth) acrylic syrup is in a range from 10 mPa*s to 10000 mPa*s, preferably from 20 mPa*s to 7000 mPa*s and advantageously from 20 mPa*s to 5000 mPa*s and more advantageously from 20 mPa*s to 2000 mPa*s and even more advantageously between 20mPa*s and 1000 mPa*s. The viscosity of the syrup can be easily measured with a Rheometer or viscosimeter. The dynamic viscosity is measured at 25°C. If the liquid (meth) acrylic syrup has a Newtonian behaviour, meaning no shear thinning, the dynamic viscosity is independent of the shearing in a rheometer or the speed of the mobile in a viscometer. If the liquid composition LC1 has a non-Newtonian behaviour, meaning shear thinning, the dynamic viscosity is measured at a shear rate of 1s⁻¹ at 25°C.

**As regards the liquid composition a) of the invention** it comprises a (meth)acrylic monomer (M1)and a (meth)acrylic polymer (P1). Once polymerized the (meth)acrylic monomer (M1) is transformed to a (meth)acrylic polymer (P2) comprising the monomeric units of (meth)acrylic monomer (M1) and other possible monomers.

**As regards the (meth)acrylic polymer (P1),** mention may be made of polyalkyl methacrylates or polyalkyl acrylates. According to a preferred embodiment, the (meth)acrylic polymer (P1) is polymethyl methacrylate (PMMA).

The term "PMMA" denotes a methyl methacrylate (MMA) homopolymer or copolymer or mixtures thereof.

According to one embodiment, the methyl methacrylate (MMA) homo- or copolymer comprises at least 70%, preferably at least 80%, advantageously at least 90% and more advantageously at least 95% by weight of methyl methacrylate.

According to another embodiment, the PMMA is a mixture of at least one homopolymer and at least one copolymer of MMA, or a mixture of at least two homopolymers or two copolymers of MMA with a different average molecular weight, or a mixture of at least two copolymers of MMA with a different monomer composition.

The copolymer of methyl methacrylate (MMA) comprises from 70% to 99.7% by weight of methyl methacrylate and from 0.3% to 30% by weight of at least one monomer containing at least one ethylenic unsaturation that can copolymerize with methyl methacrylate.

These monomers are well known and mention may be made especially of acrylic and methacrylic acids and alkyl(meth)acrylates in which the alkyl group contains from 1 to 12 carbon atoms. As examples, mention may be made of methyl acrylate and ethyl, butyl or 2-ethylhexyl (meth)acrylate. Preferably, the comonomer is an alkyl acrylate in which the alkyl group contains from 1 to 4 carbon atoms.

According to a first preferred embodiment, the copolymer of methyl methacrylate (MMA) comprises from 80% to 99.9%, advantageously from 90% to 99.9% and more advantageously from 90% to 99.9% by weight of methyl methacrylate and from 0.1% to 20%, advantageously from 0.1% to 10% and more advantageously from 0.1% to 10% by weight of at least one monomer containing at least one ethylenic unsaturation that can copolymerize with methyl methacrylate. Preferably, the comonomer is chosen from methyl acrylate and ethyl acrylate, and mixtures thereof.

The weight-average molecular mass of the (meth)acrylic polymer (P1) should be high, which means greater than 50 000 g/mol and preferably greater than 100 000 g/mol.

The weight-average molecular mass can be measured by size exclusion chromatography (SEC).

The (meth)acrylic polymer (P1) is fully soluble in the (meth)acrylic monomer (M1) or in the mixture of (meth)acrylic monomers. It enables the viscosity of the (meth)acrylic monomer (M1) or the mixture of (meth)acrylic monomers to be increased. The solution obtained is a liquid composition generally called a "syrup" or "prepolymer". The dynamic viscosity value of the liquid (meth)acrylic syrup is between 10 mPa.s and 10 000 mPa.s. The viscosity of the syrup can be readily measured with a rheometer or a viscometer. The dynamic viscosity is measured at 25°C.

Advantageously, the liquid (meth)acrylic composition or syrup contains no additional voluntarily added solvent.

**As regards the (meth)acrylic monomer (M1),** the monomer is chosen from alkyl acrylic monomers, alkyl methacrylic monomers, hydroxyalkyl acrylic monomers and hydroxyalkyl methacrylic monomers, and mixtures thereof.

Preferably, the (meth)acrylic monomer (M1) is chosen from hydroxyalkyl acrylic monomers, hydroxyalkyl methacrylic monomers, alkyl acrylic monomers, alkyl methacrylic monomers and mixtures thereof, the alkyl group containing from 1 to 22 linear, branched or cyclic carbons; the alkyl group preferably containing from 1 to 12 linear, branched or cyclic carbons.

Advantageously, the (meth)acrylic monomer (M1) is chosen from methyl methacrylate, ethyl methacrylate, methyl acrylate, ethyl acrylate, methacrylic acid, acrylic acid, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

According to a preferred embodiment, at least 50% by weight and preferably at least 60% by weight of the (meth)acrylic monomer (M1) is methyl methacrylate.

According to a first more preferred embodiment, at least 50% by weight, preferably at least 60% by weight, more preferably at least 70% by weight, advantageously at least 80% by weight and even more advantageously 90% by weight of the monomer (M1) is a mixture of methyl methacrylate with optionally at least one other monomer.

**As regards the (meth)acrylic monomer (M2),** the monomer is multifunctional. Preferably the (meth)acrylic monomer (M2) is chosen from a compound comprising at least two (meth)acrylic functions. The (meth)acrylic monomer (M2) can also be chosen from a mixture of at least two compounds(M2a) and (M2b) each comprising at least two (meth)acrylic functions.

The (meth) acrylic monomer (M2) can be chosen from 1,3-butylene glycol dimethacrylate; 1,4-butanediol dimethacrylate; 1,6 hexanediol diacrylate; 1,6 hexanediol dimethacrylate; diethylene glycol dimethacrylate; dipropylene glycol diacrylate; ethoxylated (10) bisphenol a diacrylate; ethoxylated (2) bisphenol a dimethacrylate; ethoxylated (3) bisphenol a diacrylate; ethoxylated (3) bisphenol a dimethacrylate; ethoxylated (4) bisphenol a diacrylate; ethoxylated (4) bisphenol a dimethacrylate; ethoxylated bisphenol a dimethacrylate; ethoxylated (10) bisphenol dimethacrylate; ethylene glycol dimethacrylate; polyethylene glycol (200) diacrylate; polyethylene glycol (400) diacrylate; polyethylene glycol (400) dimethacrylate; polyethylene glycol (400) dimethacrylate; polyethylene glycol (600) diacrylate; polyethylene glycol (600) dimethacrylate; polyethylene glycol 400 diacrylate; propoxylated (2) neopentyl glycol diacrylate; tetraethylene glycol diacrylate; tetraethylene glycol dimethacrylate; tricyclodecane dimethanol diacrylate; tricyclodecanedimethanol dimethacrylate; triethylene glycol diacrylate; triethylene glycol dimethacrylate; tripropylene glycol diacrylate; ethoxylated (15) trimethylolpropane triacrylate; ethoxylated (3) trimethylolpropane triacrylate; ethoxylated (6) trimethylolpropane triacrylate; ethoxylated (9) trimethylolpropane triacrylate; ethoxylated 5 pentaerythritol triacrylate; ethoxylated (20) trimethylolpropane triacrylate; propoxylated (3) glyceryl triacrylate; trimethylolpropane triacrylate; propoxylated (5.5) glyceryl triacrylate; pentaerythritol triacrylate; propoxylated (3) glyceryl triacrylate; propoxylated (3) trimethylolpropane triacrylate; trimethylolpropane triacrylate; trimethylolpropane trimethacrylate; tris(2-hydroxy ethyl) isocyanurate triacrylate; di-trimethylolpropane tetraacrylate; dipentaerythritol pentaacrylate; ethoxylated (4) pentaerythritol tetraacrylate; pentaerythritol tetraacrylate; dipentaerythritol hexaacrylate; 1,10 decanediol diacrylate; 1,3-butylene glycol diacrylate; 1,4-butanediol diacrylate; 1,9-nonanediol diacrylate; 2-(2-Vinyloxyethoxy)ethyl acrylate; 2-butyl-2-ethyl-1,3-propanediol diacrylate; 2-methyl-1,3-propanediol diacrylate; 2-methyl-1,3-propanediyl ethoxy acrylate; 3 methyl 1,5-pentanediol diacrylate; alkoxylated cyclohexane dimethanol diacrylate; alkoxylated hexanediol diacrylate; cyclohexane dimethanol diacrylate; ethoxylated cyclohexane dimethanol diacrylate; diethyleneglycol diacrylate; dioxane glycol diacrylate; ethoxylated dipentaerythritol hexaacrylate; ethoxylated glycerol triacrylate; ethoxylated neopentyl glycol diacrylate; hydroxypivalyl hydroxypivalate diacrylate; neopentyl glycol diacrylate; poly (tetramethylene glycol) diacrylate; polypropylene glycol 400 diacrylate; polypropylene glycol 700 diacrylate; propoxylated (6) ethoxylated bisphenol A diacrylate; propoxylated ethylene glycol diacrylate; propoxylated (5) pentaerythritol tetraacrylate; and propoxylated trimethylol propane triacrylate; or mixtures thereof.

In a first preferred embodiment the (meth)acrylic monomer (M2) is chosen from ethylene glycol dimethacrylate, neopentyl glycol diacrylate, neopentyl glycol dimethacrylate, 1,4-butanediol dimethacrylate, 1,4-butanediol diacrylate, 1,3-butylene glucol diacrylate, 1,3-butylene glycol dimethacrylate, triethylene glycol dimethacrylate and triethylene glycol diacrylate.

In a second preferred embodiment the (meth)acrylic monomer (M2) is chosen from ethylene glycol dimethacrylate, neopentyl glycol diacrylate, neopentyl glycol dimethacrylate, 1,4-butanediol dimethacrylate, 1,4-butanediol diacrylate, 1,3-butylene glucol diacrylate, 1,3-butylene glycol dimethacrylate, triethylene glycol dimethacrylate and triethylene glycol diacrylate or mixtures thereof.

The (meth) acrylic monomer (M2) can be present in (meth)acrylic composition MC1 between 0.01 and 10phr by weight, preferably is present between 0.1 and 9.5phr for 100 parts of a liquid (meth)acrylic syrup, more preferably between 0.1 and 9phr, even more preferably between 0.1 and 8.5phr and advantageously between 0.1 and 8phr.

In a first more preferred embodiment the (meth)acrylic monomer (M2) is present in (meth)acrylic composition MC1 between 0.01 and 9phr and is chosen from a compound comprising two (meth)acrylic functions.

In a second more preferred embodiment the (meth)acrylic monomer (M2) is present in (meth)acrylic composition MC1 between 0.01 and 9phr and is chosen from a mixture of compounds comprising two (meth)acrylic functions.

In a third more preferred embodiment the (meth)acrylic monomer (M2) is present in (meth)acrylic composition MC1 between 0.01 and 9phr and is chosen from a mixture of compounds comprising at least two (meth)acrylic functions.

In a fourth more preferred embodiment the (meth)acrylic monomer (M2) is present in (meth)acrylic composition MC1 between 0.01 and 9phr and is chosen from a mixture of compounds comprising at least two (meth)acrylic functions. At least one compound of the mixture comprises only two (meth)acrylic functions and presents at least 50wt% of the mixture of (meth)acrylic monomer (M2), preferably at least 60wt%.

**As regards the (meth)acrylic monomer (M3),** the monomer is chosen from a monomer, that once polymerized as a homomopolymer has a glass transition temperature Tg of at least 120°C. The glass transition temperature of a homopolymer can be found in the Polymer Handbook.

The (meth)acrylic monomer (M3) is different from the (meth)acrylic monomers (M1) and (M2).

The (meth)acrylic monomer (M3) is chosen from methacrylic acid.

The (meth) acrylic monomer (M3) is present in the (meth)acrylic composition MC1 between 0.01 and 10phr for 100 parts of a liquid (meth)acrylic syrup.

**As regards the metal containing compound,** it is a metal complex, a metal salt or a mixture of metal salts. Preferably the metal it is chosen from is a transition metal.

More particularly the metal of the metal complex, the metal salt or the mixture of metal salts is a metal from the fourth period of the Periodic Table of the Elements. Even more preferably, the metal is chosen from iron, copper and manganese, or mixtures thereof. Advantageously the metal salts are not comprising any cobalt.

The amount of metal complex, metal salt in the (meth)acrylic composition MC1 can be up to 10phr by weight for 100 parts of a liquid (meth)acrylic syrup.

In a first preferred embodiment the (meth)acrylic composition MC1 comprises between 0.01 phr by weight and 10 phr by weight and even more preferably between 0.05phr by weight and 3 phr by weight of metal containing compound for 100 parts of a liquid (meth)acrylic syrup.

**As regards the** reducing agent, it is chosen preferably from ascorbic acid, α-hydroxy sulfones, thioureas and saccharin (also known as benzoic sulfinide). Preferably, the reducing compound is saccharin.

The reducing agent is advantageously soluble in a polar aprotic solvent at 20°C. Preferably, the polar aprotic solvent is dimethyl sulfoxide (DMSO).

The amount of the reducing agent in the (meth)acrylic composition MC1 can be up to 10phr by weight for 100 parts of a liquid (meth)acrylic syrup.

In a first preferred embodiment the (meth)acrylic composition MC1 comprises between 0.01 phr by weight and 10 phr by weight, more preferably between 0.1 phr by weight and 2 phr and even more preferably between 0.1 phr by weight and 1 phr by weight of the reducing agent for 100 parts of a liquid (meth)acrylic syrup.

**As regards the** tertiary amine, it is chosen preferably from N,N-dimethyl-p-toluidine (DMPT), N,N-dihydroxyethyl-p-toluidine (DHEPT), N,N-diethyl-p-toluidine (DEPT) and paratoluidine ethoxylate (PTE).

The amount of the tertiary amine in the (meth)acrylic composition MC1 can be up to 20 000 ppm by weight for 100 parts of a liquid (meth)acrylic syrup.

In a first preferred embodiment the (meth)acrylic composition MC1 comprises between 100ppm by weight and 10 000ppm by weight and even more preferably between 1 000ppm by weight and 10 000ppm by weight of the reducing agent for 100 parts of a liquid (meth)acrylic syrup.

**As regards the initiator** to start the polymerization of the (meth)acrylic monomers (M1), (M2) and (M3), it is chosen from a radical initiator.

Preferably the radical initiator is a peroxide and more preferably the peroxide is liquid within a temperature range of between 0°C and 50°C.

The liquid peroxide is an organic peroxide comprising 2 to 30 carbon atoms, such as methyl ethyl ketone peroxide (MEKP), methyl isopropyl ketone peroxide (MIKP) or a hydroperoxide (HP).

Preferably, the liquid peroxide is a hydroperoxide or a peroxide comprising at least one hydroperoxide function chosen from tert-butyl hydroperoxide, monohydroperoxide, para-methane hydroperoxide, tert-amyl hydroperoxide, methyl ethyl ketone peroxide, methyl isopropyl ketone peroxide and cumene hydroperoxide. Even more preferably, it is monohydroperoxide, methyl ethyl ketone peroxide, methyl isopropyl ketone peroxide or para-methane hydroperoxide.

On decomposing, such an initiator generates free radicals which contribute toward starting the polymerization reaction.

The amount of initiator is advantageously between 0.1 part by weight and 5 parts by weight for 100 parts of a liquid (meth)acrylic syrup.

**As regards the transfer agent,** in order to control the molecular weight, it can be chosen for example from thiols, sulphur compounds comprising cyclic aromatics and terpinene derivatives as for example γ-terpinene or terpinolene.

The amount of the transfer agent in the (meth)acrylic composition MC1 can be up to 10 000 ppm by weight for 100 parts of a liquid (meth)acrylic syrup.

The amount of the transfer agent is between 0ppm by weight and 10 000ppm by weight for 100 parts of a liquid (meth)acrylic syrup. In a specific embodiment amount of the transfer agent is preferably between 0.01ppm by weight and 5 000ppm by weight and more preferably between 0.1ppm by weight and 3 000ppm by weight for 100 parts of a liquid (meth)acrylic syrup .

**As regards the antioxidant,** it can be chosen from phenolic antioxidants or phosphite antioxidants. An example of phenolic antioxidants are the IRGANOX^{®} products.

The amount of the antioxidant in the (meth)acrylic composition MC1 can be up to 10 000 ppm by weight for 100 parts of a liquid (meth)acrylic syrup.

The amount of the antioxidant is between 0ppm by weight and 10 000ppm by weight for 100 parts of a liquid (meth)acrylic syrup. In a specific embodiment amount of the transfer agent is preferably between 0.01ppm by weight and 5 000ppm by weight and more preferably between 0.1ppm by weight and 3 000ppm by weight for 100 parts of a liquid (meth)acrylic syrup.

**As regards the radical scavenger,** it is chosen from hydroquinone, hydroquinone monomethylether, vitamin E, nitroxides, nitroxyls or alkoxyamines and mixtures thereof.

In a variation the radical scavenger is chosen from nitroxides and alkoxyamines

In an exemplary embodiment the radical scavenger is 4-hydroxy-2,2,6,6-tetramethylpiperidin-1-oxyl.

The amount of the radical scavenger in the (meth)acrylic composition MC1 can be up to 1 000 ppm by weight for 100 parts of a liquid (meth)acrylic syrup.

The amount of the radical scavenger is between 0ppm by weight and 1 000ppm by weight for 100 parts of a liquid (meth)acrylic syrup. In a specific embodiment amount of the transfer agent is preferably between 0.01ppm by weight and 500ppm by weight and more preferably between 0.1ppm by weight and 400ppm by weight for 100 parts of a liquid (meth)acrylic syrup.

**As regards the light stabilizer,** it can for example be chosen from HALS (hindered amine light stabilizer) or phosphites.

For example the HALS can be derivates of 2,2,6,6-tetramethyl-piperidine as for example bis(2,2,6,6-tetramethyl-4-piperidyl) sebacate.

The amount of the light stabilizer in the (meth)acrylic composition MC1 can be up to 1 000 ppm by weight for 100 parts of a liquid (meth)acrylic syrup.

In a specific embodiment amount of the light stabilizer is preferably between 0.01ppm by weight and 7 000ppm by weight and more preferably between 0.1ppm by weight and 5 000ppm by weight relative to the sum of the (meth)acrylic monomer and of the (meth)acrylic polymer.

**As regards the thermal stabilizing agent,** it can for example be chosen from a disulfide compound as for example poly-teramylphenoldisulfide.

The amount of the thermal stabilizing agent in the (meth)acrylic composition MC1 can be up to 1 000 ppm by weight for 100 parts of a liquid (meth)acrylic syrup.

In a specific embodiment amount of the thermal stabilizing agent is preferably between 0.01ppm by weight and 5 000ppm by weight and more preferably between 0.1ppm by weight and 3 000ppm by weight relative to the sum of the (meth)acrylic monomer and of the (meth)acrylic polymer.

**As regards the inorganic filler,** mention may be made of short glass fibers, hollow glass microspheres, inorganic compounds, such as minerals and salts

The inorganic compound is including quartz, granite, marble, feldspar, clay, ceramics, mica, graphite, silicates, carbonates, sulfates, phosphates, hydroxides, metallic oxides or combinations of two or more thereof.

As specific compound there may be cited calcium carbonate (CaCO₃), silica (SiO₂), alumina hydroxide (AlOH₃), magnesium hydroxide.

The amount of the inorganic filler in the (meth)acrylic composition MC1 can be up to 300 phr by weight for 100 parts of a liquid (meth)acrylic syrup.

In one specific embodiment the (meth)acrylic composition MC1 comprises between 0.01 phr by weight and 300 phr by weight, more preferably between 0.1 phr by weight and 100 phr and even more preferably between 0.1 phr by weight and 80 phr by weight of the inorganic filler for 100 parts of a liquid (meth)acrylic syrup.

The quantity of the inorganic filler if present, is adapted in a manner that the (meth)acrylic composition MC1 comprising it has a viscosity of 25Pa*s or less at temperature of 25°C.

**As regards the fibrous substrate,** mention may be made of several fibres, uni directional rovings or continuous filament mat, fabrics, felts or nonwovens that may be in the form of strips, laps, braids, locks or pieces. The fibrous material may have various forms and dimensions, either one-dimensional, two-dimensional or three-dimensional. A fibrous substrate comprises an assembly of one or more fibres. When the fibres are continuous, their assembly forms fabrics.

The one-dimensional form corresponds to linear long fibres. The fibres may be discontinuous or continuous. The fibres may be arranged randomly or parallel to each other, in the form of a continuous filament. A fibre is defined by its aspect ratio, which is the ratio between the length and diameter of the fibre. The fibres used in the present invention are long fibres or continuous fibres. The fibres have an aspect ratio of at least 1000, preferably at least 1500, more preferably at least 2000, advantageously at least 3000 and more advantageously at least 5000, even more advantageously at least 6000, more advantageously still at least 7500 and most advantageously at least 10 000.

The two-dimensional form corresponds to nonwoven or woven fibrous mats or reinforcements or bundles of fibres, which may also be braided. Even if the two-dimensional form has a certain thickness and consequently in principle a third dimension, it is considered as two-dimensional according to the present invention.

The three-dimensional form corresponds, for example, to nonwoven fibrous mats or reinforcements or stacked or folded bundles of fibres or mixtures thereof, an assembly of the two-dimensional form in the third dimension.

The origins of the fibrous material may be natural or synthetic. As natural material one can mention plant fibres, wood fibres, animal fibres or mineral fibres.

Natural fibres are, for example, sisal, jute, hemp, flax, cotton, coconut fibres, and banana fibres. Animal fibres are, for example, wool or hair.

As synthetic material, mention may be made of polymeric fibres chosen from fibres of thermosetting polymers, of thermoplastic polymers or mixtures thereof.

The polymeric fibres may consist of polyamide (aliphatic or aromatic), polyester, polyvinyl alcohol, polyolefins, polyurethanes, polyvinyl chloride, polyethylene, unsaturated polyesters, epoxy resins and vinyl esters.

The mineral fibres may also be chosen from glass fibres, especially of E, R or S2 type, carbon fibres, boron fibres or silica fibres.

The fibrous substrate of the present invention is chosen from plant fibres, wood fibres, animal fibres, mineral fibres, synthetic polymeric fibres, glass fibres and carbon fibres, and mixtures thereof.

Preferably, the fibrous substrate is chosen from mineral fibres. More preferably the fibrous substrate is chosen from glass fibres or carbon fibres.

The fibres of the fibrous substrate have a diameter between 0.005 um and 100 um, preferably between 1 µm and 50 µm, more preferably between 5 µm and 30 µm and advantageously between 10 µm and 25 µm.

Preferably, the fibres of the fibrous substrate of the present invention are chosen from continuous fibres (meaning that the aspect ratio does not necessarily apply as for long fibres) for the one-dimensional form, or for long or continuous fibres for the two-dimensional or three-dimensional form of the fibrous substrate.

The present invention relates also to a method for preparing a (meth) acrylic composition MC1 mentioned previously comprising following steps:
i) providing the following components
   a) a (meth)acrylic polymer (P1) and a (meth)acrylic monomer (M1) comprising only one (meth)acrylic function
   b) a (meth)acrylic monomer (M2) comprising at least two (meth)acrylic functions
   c) a (meth) acrylic monomer (M3) comprising only one (meth)acrylic function and the (meth)acrylic monomer (M3) is different from (meth) acrylic monomer (M1, characterized in that the (meth)acrylic monomer (M3) is chosen from methacrylic acid )
ii) mixing the components a) to c).

In one specific embodiment the present invention relates to a method for preparing a (meth)acrylic composition MC1 comprising following steps:
i) providing the following components
   a) a (meth)acrylic polymer (P1) and a (meth)acrylic monomer (M1) comprising only one (meth)acrylic function
   b) a (meth)acrylic monomer (M2) comprising at least two (meth)acrylic functions
   c) a (meth)acrylic monomer (M3) comprising only one (meth)acrylic function and the (meth)acrylic monomer (M3) is different from (meth) acrylic monomer (M1), characterized in that the (meth)acrylic monomer (M3) is chosen from methacrylic acid
   c) a metal containing compound;
   d) a reducing agent
   e) a tertiary amine;
   f) a initiator to start the polymerization of the (meth)acrylic monomers (M1), (M2) and (M3);
   g) a transfer agent;
   h) an antioxidant;
   i) a radical scavenger;
   j) a thermal stabilizing agent and
   k) a light stabilizer;
ii) mixing the components a) to k)

In a further specific embodiment in step i) is also provided an inorganic filler.

The components in the method for preparing a (meth)acrylic composition MC1 and its specific embodiments are the same as defined before and their respective weight ratios.

Preferably the initiator f) is added as last component.

The present invention relates as well to the use of the (meth)acrylic composition MC1 to impregnate a fibrous substrate, said meth)acrylic composition MC1 comprises:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
d) from 0phr and 10phr by weight of a metal containing compound;
e) from 0phr and 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3) ;
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler.

The present invention relates as well to the use of a (meth)acrylic composition MC1 to prepare (meth)acrylic polymeric composition, said (meth)acrylic composition MC1 comprises:
a) 100 parts of a liquid (meth)acrylic syrup comprising
   a1) between 10wt% and 50wt% of a (meth)acrylic polymer (P1),
   a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
d) from 0phr and 10phr by weight of a metal salt or a mixture of metal salts;
e) from 0phr and 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3) ;
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler.

The components a) to m) in the use of the (meth) acrylic composition MC1 and its specific embodiments are the same as defined before and their respective weight ratios.

The present the present invention relates additionally to a method for preparing a polymeric composite from a (meth)acrylic composition MC1, said method comprises the following steps:
i) impregnating a fibrous substrate with a (meth)acrylic composition MC1 comprising:
   a) 100 parts of a liquid (meth)acrylic syrup comprising
      a1) between 10wt% and 50wt% of a (meth)acrylic polymer (P1),
      a2) between 50wt% and 90wt% of a (meth)acrylic monomer (M1) comprising only one (meth)acrylic function, and
   b) between 0.01 and 10phr by weight of a (meth)acrylic monomer (M2) comprising at least two (meth)acrylic functions;
   c) between 0.01 and 10phr by weight of a (meth)acrylic monomer (M3) comprising only one (meth)acrylic function and the (meth)acrylic monomer (M3) is different from (meth)acrylic monomer (M1), characterized in that the (meth)acrylic monomer (M3) is chosen from methacrylic acid
   d) from 0phr and 10phr by weight of a metal salt or a mixture of metal salts;
   e) from 0phr and 10phr by weight of a reducing agent
   f) from 0ppm and 20 000ppm of a tertiary amine;
   g) from 0.1phr and 5phr of a initiator to start the polymerization of the (meth)acrylic monomers (M1), (M2) and (M3) ;
   h) from 0ppm to 10 000ppm of a transfer agent;
   i) from 0ppm to 10 000ppm of an antioxidant;
   j) from 0ppm to 1 000ppm a radical scavenger;
   k) from 0ppm to 10 000ppm of a thermal stabilizing agent and
   l) from 0ppm to 10 000ppm of a HALS
   m) optionally an inorganic filler.
ii) polymerizing the (meth)acrylic composition MC1.

The components a) to m) in the method for preparing a polymeric composite are the same as defined before and their respective weight ratios.

The polymerization step takes place at a temperature typically below 120°C, preferably below 80°C and even more preferably below 40°C.

The polymerization takes place in a mould, and preferably in a closed mold.

**With regard to the use of polymeric composite material,** one can mention automotive and motorsports applications as for example pressure vessel, ballistic & defense applications, marine applications, railroad and transport applications, sport, leisure and recreational applications, arts and entertainments applications, aeronautic and aerospace applications, construction and civil engineering applications, oil & gas applications, renewable applications such as photovoltaic applications and wind energy applications.

As regards the use of the mechanical parts made of composite material thus manufactured, mention may be made of automotive applications, transport applications such as buses or lorries, marine applications, railroad applications, sport, aeronautic and aerospace applications, photovoltaic applications, computer-related applications, construction and building applications, packaging or storage application, telecommunication applications and wind energy applications.

The mechanical part made of composite material is especially a motor vehicle part, boat part, bus part, train part, sport article, plane or helicopter part, space ship or rocket part, photovoltaic module part, a material for construction or building, wind turbine part for example spar cap of girder of wind turbine blade, furniture part, construction or building part.

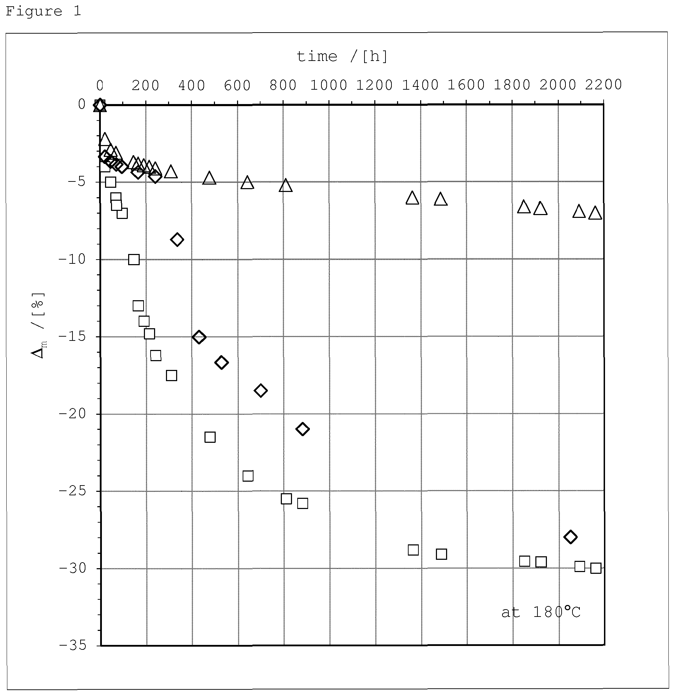

Figures: Figure 1 shows the relative loss of mass of samples (Δₘ in %) as function of time at 180°C. The squares (□) symbol is a comparative example and diamond and triangle (◇ and △) symbols are examples according to the invention made from syrups S2 and S3 respectively.

### [Examples]

Comparative example 1: A syrup S1 is prepared by dissolving 25 parts by weight of the PMMA (BS520 a copolymer of MMA comprising ethyl acrylate as a comonomer) in 75 parts by weight of methyl methacrylate, which is stabilized with MEHQ (hydroquinone monomethyl ether). Syrup S1 is used to prepare the composition of the examples of the invention by adding additional compounds.

### Reference

Example 1. A syrup S2 is prepared from syrup S1 by adding 5 parts 1,4-butanediol dimethacrylate to the 100 parts by weight of the syrup S1 .

Example 2: A syrup S3 is prepared from syrup S1 by adding to the 100 parts by weight of the syrup S1 the following additional compounds: 5 parts 1,4-butanediol dimethacrylate (SR214 from Sartomer), 5 parts of methacrylic acid, 1000ppm of benzenepropanoic acid, 3,5-bis(1,1-dimethylethyl)-4- hydroxy-, 1,1'-(thiodi-2,1-ethanediyl) ester (IRGANOX 1035 from BASF), 4000ppm of N,N-dihydroxyethyl-p-toluidine, 1000ppm of bis(2,2,6,6-tetramethyl-4-piperidyl) sebacate (Tinuvin 770DF from BASF), 1000ppm of vultac 3 (from Arkema) , 1500ppm of terpinolene, 200ppm of 4-hydroxy-2,2,6,6-tetramethylpiperidin-1-oxyl (Tempoxy LO from 3V SiGMA), 1 part of an iron complex accelerator (Nouryact CF40 from AKZO) and 0.3 parts of sacharine.

Each of the respective syrups S1 to S3 is blended with 68wt% of aluminum hydroxide (ATH), the two together making up 100wt%. At the end 0.75phr of initiator methyl ethyl ketone peroxide (Butanox^{®} M-50) relative to the syrup part are added. The compositions are mixed in order to obtain a homogenous composition. The respective compositions are put under vacuum for degasing and transferred into a mold at 21°C.

Polymerization starts at 21°C and takes place. Three molded materials are obtained based on the respective syrups.

The thermal aging is evaluated on each of the three molded compounds. Therefor a sample of about 10g is cut off from each molded compounds. The samples are put in a ventilated oven at 180°C and the samples are weighted from time to time over a period of about 2200hours.

The thermal aging is expressed in a relative mass loss in % from the initial sample.

This relative mass loss is shown in figure 1 for the material obtained from the three respective syrups. Figure 1 shows that the relative mass loss for reference 1 (◇) and example 2 (△) according to the invention are less than the comparative example (□), which signifies a better thermal resistance.

## Claims

1. A (meth)acrylic composition MC1 comprising,
a) 100 parts of a liquid (meth)acrylic syrup comprising
a1) between 10wt% and 50wt% of a (meth)acrylic polymer (P1), and
a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr of a (meth)acrylic monomer (M3) comprising only one (meth)acrylic function and the (meth)acrylic monomer (M3) is different from (meth)acrylic monomer (M1);
d) from 0phr to 10phr by weight of a metal containing compound;
e) from 0phr to 10phr by weight of a reducing agent
f) from 0ppm and 20 000ppm of a tertiary amine;
g) from 0phr and 5phr of a initiator to start the polymerization of the (meth)acrylic monomers (M1), (M2) and (M3);
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a light stabilizer;
m)optionally an inorganic filler;
**characterized in that** the (meth)acrylic monomer (M3) is chosen from methacrylic acid.

2. The (meth)acrylic composition MC1 according to claim 1, **characterized in that** the (meth)acrylic monomer (M2) is chosen from 1,3-butylene glycol dimethacrylate; 1,4-butanediol dimethacrylate; 1,6 hexanediol diacrylate; 1,6 hexanediol dimethacrylate; diethylene glycol dimethacrylate; dipropylene glycol diacrylate; ethoxylated (10) bisphenol a diacrylate; ethoxylated (2) bisphenol a dimethacrylate; ethoxylated (3) bisphenol a diacrylate; ethoxylated (3) bisphenol a dimethacrylate; ethoxylated (4) bisphenol a diacrylate; ethoxylated (4) bisphenol a dimethacrylate; ethoxylated bisphenol a dimethacrylate; ethoxylated (10) bisphenol dimethacrylate; ethylene glycol dimethacrylate; polyethylene glycol (200) diacrylate; polyethylene glycol (400) diacrylate; polyethylene glycol (400) dimethacrylate; polyethylene glycol (400) dimethacrylate; polyethylene glycol (600) diacrylate; polyethylene glycol (600) dimethacrylate; polyethylene glycol 400 diacrylate; propoxylated (2) neopentyl glycol diacrylate; tetraethylene glycol diacrylate; tetraethylene glycol dimethacrylate; tricyclodecane dimethanol diacrylate; tricyclodecanedimethanol dimethacrylate; triethylene glycol diacrylate; triethylene glycol dimethacrylate; tripropylene glycol diacrylate; ethoxylated (15) trimethylolpropane triacrylate; ethoxylated (3) trimethylolpropane triacrylate; ethoxylated (6) trimethylolpropane triacrylate; ethoxylated (9) trimethylolpropane triacrylate; ethoxylated 5 pentaerythritol triacrylate; ethoxylated (20) trimethylolpropane triacrylate; propoxylated (3) glyceryl triacrylate; trimethylolpropane triacrylate; propoxylated (5.5) glyceryl triacrylate; pentaerythritol triacrylate; propoxylated (3) glyceryl triacrylate; propoxylated (3) trimethylolpropane triacrylate; trimethylolpropane triacrylate; trimethylolpropane trimethacrylate; tris(2-hydroxy ethyl) isocyanurate triacrylate; di-trimethylolpropane tetraacrylate; dipentaerythritol pentaacrylate; ethoxylated (4) pentaerythritol tetraacrylate; pentaerythritol tetraacrylate; dipentaerythritol hexaacrylate; 1,10 decanediol diacrylate; 1,3-butylene glycol diacrylate; 1,4-butanediol diacrylate; 1,9-nonanediol diacrylate; 2-(2-Vinyloxyethoxy)ethyl acrylate; 2-butyl-2-ethyl-1,3-propanediol diacrylate; 2-methyl-1,3-propanediol diacrylate; 2-methyl-1,3-propanediyl ethoxy acrylate; 3 methyl 1,5-pentanediol diacrylate; alkoxylated cyclohexane dimethanol diacrylate; alkoxylated hexanediol diacrylate; cyclohexane dimethanol diacrylate; ethoxylated cyclohexane dimethanol diacrylate; diethyleneglycol diacrylate; dioxane glycol diacrylate; ethoxylated dipentaerythritol hexaacrylate; ethoxylated glycerol triacrylate; ethoxylated neopentyl glycol diacrylate; hydroxypivalyl hydroxypivalate diacrylate; neopentyl glycol diacrylate; poly (tetramethylene glycol) diacrylate; polypropylene glycol 400 diacrylate; polypropylene glycol 700 diacrylate; propoxylated (6) ethoxylated bisphenol A diacrylate; propoxylated ethylene glycol diacrylate; propoxylated (5) pentaerythritol tetraacrylate; and propoxylated trimethylol propane triacrylate.

3. The (meth)acrylic composition MC1 according to claim 1, **characterized in that** the (meth)acrylic monomer (M2) is chosen from ethylene glycol dimethacrylate, neopentyl glycol diacrylate, neopentyl glycol dimethacrylate, 1,4-butanediol dimethacrylate, 1,4-butanediol diacrylate, 1,3-butylene glucol diacrylate, 1,3-butylene glycol dimethacrylate, triethylene glycol dimethacrylate and triethylene glycol diacrylate.

4. The (meth)acrylic composition MC1 according to claim 1, **characterized in that** the (meth)acrylic monomer (M1) is chosen from alkyl acrylic monomers, alkyl methacrylic monomers, hydroxyalkyl acrylic monomers and hydroxyalkyl methacrylic monomers, and mixtures thereof, the alkyl group possibly being linear, branched or cyclic and containing from 1 to 22 carbon atoms, preferably from 1 to 12 carbon atoms.

5. The (meth)acrylic composition MC1 according to any of claims 1 to 4, **characterized in that** the reducing agent e) is chosen from at least one of the following compounds: ascorbic acid, saccharin, α-hydroxy sulfones or thioureas or mixtures thereof.

6. The (meth)acrylic composition MC1 according to any of claims 1 to 5, **characterized in that** the metal of the metal containing compound d) is a transition metal chosen from the fourth period of the periodic system of elements and preferably the metal is chosen from iron, copper and manganese, or mixtures thereof.

7. The (meth)acrylic composition MC1 according to claim 1, **characterized in that** the peroxide compound is a hydroperoxide chosen from: tert-butyl hydroperoxide, monohydroperoxide, para-methane hydroperoxide, tert-amyl hydroperoxide and cumene hydroperoxide.

8. The (meth)acrylic composition MC1 according to any of claims 1 to 7, **characterized in that** the liquid (meth)acrylic syrup comprises
a1) between 10wt% and 30wt% of a (meth)acrylic polymer (P1), and
a2) between 70wt% and 90wt% of a (meth)acrylic monomer (M1) comprising only one (meth)acrylic function.

9. The (meth)acrylic composition MC1 according to any of claims 1 to 8, **characterized in that** the (meth)acrylic composition MC1 comprises between 0.01 phr by weight and 10 phr by weight, more preferably between 0.1 phr by weight and 2 phr and even more preferably between 0.1 phr by weight and 1 phr by weight of the reducing agent.

10. The (meth)acrylic composition according to any of claims 1 to 9, **characterized in that** the (meth)acrylic monomer (M2) is present in (meth)acrylic composition MC1 between 0.01 and 9phr and is chosen from a compound comprising two (meth)acrylic functions or a mixture of compounds comprising two (meth)acrylic functions.

11. Method for preparing a (meth)acrylic composition MC1 according to any of claims 1 to 10 comprising following steps:
i) providing the following components:
a) a (meth)acrylic polymer (P1) and a (meth)acrylic monomer (M1) comprising only one (meth)acrylic function
b) a (meth)acrylic monomer (M2) comprising at least two (meth)acrylic functions
c) a (meth) acrylic monomer (M3) comprising only one (meth)acrylic function and the (meth)acrylic monomer (M3) is different from (meth)acrylic monomer (M1) **characterized in that** the (meth)acrylic monomer (M3) is chosen from methacrylic acid
ii) mixing the components a) to c).

12. Use of the (meth)acrylic composition MC1 according to any of claims 1 to 10 or prepared by method according to claim 11, to impregnate a fibrous substrate.

13. Use of the (meth) acrylic composition MC1 according to any of claims 1 to 10 or prepared by method according to claim 11, to prepare (meth)acrylic polymeric composition.

14. A method for preparing a polymeric composite from a (meth)acrylic composition MC1, said method comprises the following steps:
i) impregnating a fibrous substrate with a (meth)acrylic composition MC1 comprising:
a) 100 parts of a liquid (meth)acrylic syrup comprising
a1) between 10wt% and 50wt% of a (meth)acrylic polymer (P1),
a2) between 50wt% and 90wt% of a (meth)acrylic monomer (M1) comprising only one (meth)acrylic function, and
b) between 0.01 and 10phr by weight of a (meth)acrylic monomer (M2) comprising at least two (meth)acrylic functions;
c) between 0.01 and 10phr by weight of a (meth)acrylic monomer (M3) comprising only one (meth)acrylic function and the (meth)acrylic monomer (M3) is different from (meth)acrylic monomer (M1);
d) from 0phr and 10phr by weight of a metal containing compound;
e) from 0phr and 10phr by weight of a reducing agent
f) from 0ppm and 20 000ppm of a tertiary amine;
g) from 0.1phr and 5phr of a initiator to start the polymerization of the (meth)acrylic monomers (M1), (M2) and (M3);
h) from 0ppm to 10 000ppm of a transfer agent;
i) from 0ppm to 10 000ppm of an antioxidant;
j) from 0ppm to 1 000ppm a radical scavenger;
k) from 0ppm to 10 000ppm of a thermal stabilizing agent and
l) from 0ppm to 10 000ppm of a HALS
m) optionally an inorganic filler; **characterized in that** the (meth)acrylic monomer (M3) is chosen from methacrylic acid
ii) polymerizing the (meth)acrylic composition MC1.

15. A polymeric composite material obtained from a method according to claim 14.

16. Use of the composite material of claim 15 in automotive and motorsports applications as for example pressure vessel, ballistic & defense applications, marine applications, railroad and transport applications, sport, leisure and recreational applications, arts and entertainments applications, aeronautic and aerospace applications, construction and civil engineering applications, oil & gas applications, renewable applications such as photovoltaic applications and wind energy applications.

## Patentansprüche

1. (Meth)acrylzusammensetzung MC1, umfassend
a) 100 Teile an einem flüssigen (Meth)acrylsirup umfassend
a1) zwischen 10 Gew.-% und 50 Gew.-% an einem (Meth)acrylpolymer (P1) und
a2) zwischen 50 Gew.-% und 90 Gew.-% an einem (Meth)acrylmonomer (M1), das nur eine (Meth)acrylfunktion umfasst; und
b) zwischen 0,01 und 10 phr nach Gewicht an einem (Meth)acrylmonomer (M2), das wenigstens zwei (Meth)acrylfunktionen umfasst;
c) zwischen 0,01 und 10 phr an einem (Meth)acrylmonomer (M3), das nur eine (Meth)acrylfunktionen umfasst, wobei das (Meth)acrylmonomer (M3) von dem (Meth)acrylmonomer (M1) verschieden ist;
d) von 0 phr bis 10 phr nach Gewicht an einer metallhaltigen Verbindung;
e) von 0 phr bis 10 phr nach Gewicht an einem Reduktionsmittel;
f) von 0 ppm bis 20.000 ppm an einem tertiären Amin;
g) von 0 phr bis 5 phr an einem Initiator zum Starten des Polymerisation der (Meth)acrylmonomere (M1), (M2) und (M3);
h) von 0 ppm bis 10.000 ppm an einem Transfermittel;
i) von 0 ppm bis 10.000 ppm an einem Antioxidationsmittel;
j) von 0 ppm bis 1000 ppm an einem Radikalfänger;
k) von 0 ppm bis 10.000 ppm an einem Wärmestabilisator; und
l) von 0 ppm bis 10.000 ppm an einem Lichtstabilisator;
m) gegebenenfalls einen anorganischen Füllstoff;
**dadurch gekennzeichnet, dass** das (Meth)acrylmonomer (M3) ausgewählt ist aus Methacrylsäure.

2. (Meth)acrylzusammensetzung MC1 gemäß Anspruch 1, **dadurch gekennzeichnet, dass** das (Meth)acrylmonomer (M2) ausgewählt ist aus 1,3-Butylenglycoldimethacrylat; 1,4-Butandioldimethacrylat; 1,6-Hexandioldiacrylat; 1,6-Hexandioldimethacrylat; Diethylenglycoldimethacrylat; Dipropylenglycoldiacrylat; ethoxyliertem (10) Bisphenol-A-diacrylat; ethoxyliertem (2) Bisphenol-A-dimethacrylat; ethoxyliertem (3) Bisphenol-A-diacrylat; ethoxyliertem (3) Bisphenol-A-dimethacrylat; ethoxyliertem (4) Bisphenol-A-diacrylat; ethoxyliertem (4) Bisphenol-A-dimethacrylat; ethoxyliertem Bisphenol-A-dimethacrylat; ethoxyliertem (10) Bisphenoldimethacrylat; Ethylenglycoldimethacrylat; Polyethylenglycol(200)diacrylat; Polyethylenglycol(400)diacrylat; Polyethylenglycol(400)dimethacrylat; Polyethylenglycol(400)dimethacrylat; Polyethylenglycol(600)diacrylat; Polyethylenglycol(600)dimethacrylat; Polyethylenglycol(400)diacrylat; propoxyliertem (2) Neopentylglycoldiacrylat; Tetraethylenglycoldiacrylat; Tetraethylenglycoldimethacrylat; Tricyclodecandimethanoldiacrylat; Tricyclodecandimethanoldimethacrylat; Triethylenglycoldiacrylat; Triethylenglycoldimethacrylat; Tripropylenglycoldiacrylat; ethoxyliertem (15) Trimethylolpropantriacrylat; ethoxyliertem (3) Trimethylolpropantriacrylat; ethoxyliertem (6) Trimethylolpropantriacrylat; ethoxyliertem (9) Trimethylolpropantriacrylat; ethoxyliertem (5) Pentaerythritoltriacrylat; ethoxyliertem (20) Trimethylolpropantriacrylat; propoxyliertem (3) Glyceryltriacrylat; Trimethylolpropantriacrylat; propoxyliertem (5.5) Glyceryltriacrylat; Pentaerythritoltriacrylat; propoxyliertem (3) Glyceryltriacrylat; propoxyliertem (3) Trimethylolpropantriacrylat; Trimethylolpropantriacrylat; Trimethylolpropantrimethacrylat; Tris(2-hydroxyethyl)isocyanurattriacrylat; Ditrimethylolpropantetraacrylat; Dipentaerythritolpentaacrylat; ethoxyliertem (4) Pentaerythritoltetraacrylat; Pentaerythritoltetraacrylat; Dipentaerythritolhexaacrylat; 1,10-Decandioldiacrylat; 1,3-Butylenglycoldiacrylat; 1,4-Butandioldiacrylat; 1,9-Nonandioldiacrylat; 2-(2-Vinyloxyethoxy)ethylacrylat; 2-Butyl-2-ethyl-1,3-propandioldiacrylat; 2-Methyl-1,3-propandioldiacrylat; 2-Methyl-1,3-propandiylethoxyacrylat; 3-Methyl-1,5-pentandioldiacrylat; alkoxyliertem Cyclohexandimethanoldiacrylat; alkoxyliertem Hexandioldiacrylat; Cyclohexandimethanoldiacrylat; ethoxyliertem Cyclohexandimethanoldiacrylat; Diethylenglycoldiacrylat; Dioxanglycoldiacrylat; ethoxyliertem Dipentaerythritolhexaacrylat; ethoxyliertem Glyceroltriacrylat; ethoxyliertem Neopentylglycoldiacrylat; Hydroxypivalylhydroxypivalatdiacrylat; Neopentylglycoldiacrylat; Poly(tetramethylenglycol)diacrylat; Polypropylenglycol(400)diacrylat; Polypropylenglycol(700)diacrylat; propoxyliertem (6) ethoxyliertem Bisphenol-A-diacrylat; propoxyliertem Ethylenglycoldiacrylat; propoxyliertem (5) Pentaerythritoltetraacrylat; und propoxyliertem Trimethylolpropantriacrylat.

3. (Meth)acrylzusammensetzung MC1 gemäß Anspruch 1, **dadurch gekennzeichnet, dass** das (Meth)acrylmonomer (M2) ausgewählt ist aus Ethylenglycoldimethacrylat, Neopentylglycoldiacrylat, Neopentylglycoldimethacrylat, 1,4-Butandioldimethacrylat, 1,4-Butandioldiacrylat, 1,3-Butylenglycoldiacrylat, 1,3-Butylenglycoldimethacrylat, Triethylenglycoldimethacrylat und Triethylenglycoldiacrylat.

4. (Meth)acrylzusammensetzung MC1 gemäß Anspruch 1, **dadurch gekennzeichnet, dass** das (Meth)acrylmonomer (M1) ausgewählt ist aus Alkylacrylmonomeren, Alkylmethacrylmonomeren, Hydroxyalkylacrylmonomeren und Hydroxyalkylmethacrylmonomeren und Gemischen davon, wobei die Alkylgruppe gegebenenfalls linear, verzweigt oder cyclisch ist und von 1 bis 22 Kohlenstoffatome enthält, vorzugsweise von 1 bis 12 Kohlenstoffatome.

5. (Meth)acrylzusammensetzung MC1 gemäß einem der Ansprüche 1 bis 4, **dadurch gekennzeichnet, dass** das Reduktionsmittel e) ausgewählt ist aus wenigstens einer der folgenden Verbindungen: Ascorbinsäure, Saccharin, α-Hydroxysulfonen und Thioharnstoffen und Gemischen davon.

6. (Meth)acrylzusammensetzung MC1 gemäß einem der Ansprüche 1 bis 5, **dadurch gekennzeichnet, dass** das Metall der metallhaltigen Verbindung d) ein Übergangsmetall ausgewählt aus der vierten Periode des Periodensystems der Elemente ist und vorzugsweise das Metall ausgewählt ist aus Eisen, Kupfer und Mangan und Gemischen davon.

7. (Meth)acrylzusammensetzung MC1 gemäß Anspruch 1, **dadurch gekennzeichnet, dass** die Peroxidverbindung ein Hydroperoxid ausgewählt aus: tert-Butylhydroperoxid, Monohydroperoxid, para-Methanhydroperoxid, tert-Amylhydroperoxid und Cumenhydroperoxid ist.

8. (Meth)acrylzusammensetzung MC1 gemäß einem der Ansprüche 1 bis 7, **dadurch gekennzeichnet, dass** der flüssige (Meth)acrylsirup umfasst:
a1) zwischen 10 Gew.-% und 30 Gew.-% an einem (Meth)acrylpolymer (P1) und
a2) zwischen 70 Gew.-% und 90 Gew.-% an einem (Meth)acrylmonomer (M1), das nur eine (Meth)acrylfunktion umfasst.

9. (Meth)acrylzusammensetzung MC1 gemäß einem der Ansprüche 1 bis 8, **dadurch gekennzeichnet, dass** die (Meth)acrylzusammensetzung MC1 zwischen 0,01 phr nach Gewicht und 10 phr nach Gewicht, bevorzugter zwischen 0,1 phr nach Gewicht und 2 phr und noch bevorzugter zwischen 0,1 phr nach Gewicht und 1 phr nach Gewicht an dem Reduktionsmittel umfasst.

10. (Meth)acrylzusammensetzung MC1 gemäß einem der Ansprüche 1 bis 9, **dadurch gekennzeichnet, dass** das (Meth)acrylmonomer (M2) in der (Meth) acrylzusammensetzung MC1 in zwischen 0,01 und 9 phr vorhanden ist und ausgewählt ist aus einer Verbindung, die zwei (Meth)acrylfunktionen umfasst und einem Gemisch von Verbindungen, die zwei (Meth)acrylfunktionen umfassen.

11. Verfahren zur Herstellung einer (Meth)acrylzusammensetzung MC1 gemäß einem der Ansprüche 1 bis 10, umfassend folgende Schritte:
i) Bereitstellen der folgenden Komponenten:
a) ein (Meth)acrylpolymer (P1) und ein (Meth)acrylmonomer (M1), das nur eine (Meth)acrylfunktion umfasst,
b) ein (Meth)acrylmonomer (M2), das wenigstens zwei (Meth)acrylfunktionen umfasst,
c) ein (Meth)acrylmonomer (M3), das nur eine (Meth)acrylfunktionen umfasst, wobei das (Meth)acrylmonomer (M3) von dem (Meth)acrylmonomer (M1) verschieden ist, **dadurch gekennzeichnet, dass** das (Meth)acrylmonomer (M3) ausgewählt ist aus Methacrylsäure,
ii) Mischen der Komponenten a) bis c).

12. Verwendung der (Meth)acrylzusammensetzung MC1 gemäß einem der Ansprüche 1 bis 10 oder hergestellt durch das Verfahren gemäß Anspruch 11 zum Imprägnieren eines Fasersubstrats.

13. Verwendung der (Meth)acrylzusammensetzung MC1 gemäß einem der Ansprüche 1 bis 10 oder hergestellt durch das Verfahren gemäß Anspruch 11 zur Herstellung einer (Meth)acrylpolymer-Zusammensetzung.

14. Verfahren zur Herstellung eines Polymerverbundstoffs aus einer (Meth)acrylzusammensetzung MC1, wobei das Verfahren die folgenden Schritte umfasst:
i) Imprägnieren eines Fasersubstrats mit einer (Meth)acrylzusammensetzung MC1, die umfasst:
a) 100 Teile an einem flüssigen (Meth)acrylsirup umfassend
a1) zwischen 10 Gew.-% und 50 Gew.-% an einem (Meth)acrylpolymer (P1),
a2) zwischen 50 Gew.-% und 90 Gew.-% an einem (Meth)acrylmonomer (M1), das nur eine (Meth)acrylfunktion umfasst; und
b) zwischen 0,01 und 10 phr nach Gewicht an einem (Meth)acrylmonomer (M2), das wenigstens zwei (Meth)acrylfunktionen umfasst;
c) zwischen 0,01 und 10 phr nach Gewicht an einem (Meth)acrylmonomer (M3), das nur eine (Meth)acrylfunktionen umfasst, wobei das (Meth)acrylmonomer (M3) von dem (Meth)acrylmonomer (M1) verschieden ist;
d) von 0 phr bis 10 phr nach Gewicht an einer metallhaltigen Verbindung;
e) von 0 phr bis 10 phr nach Gewicht an einem Reduktionsmittel;
f) von 0 ppm bis 20.000 ppm an einem tertiären Amin;
g) von 0 phr bis 5 phr an einem Initiator zum Starten des Polymerisation der (Meth)acrylmonomere (M1), (M2) und (M3);
h) von 0 ppm bis 10.000 ppm an einem Transfermittel;
i) von 0 ppm bis 10.000 ppm an einem Antioxidationsmittel;
j) von 0 ppm bis 1000 ppm an einem Radikalfänger;
k) von 0 ppm bis 10.000 ppm an einem Wärmestabilisator; und
l) von 0 ppm bis 10.000 ppm an einem HALS;
m) gegebenenfalls einen anorganischen Füllstoff;
**dadurch gekennzeichnet, dass** das (Meth)acrylmonomer (M3) ausgewählt ist aus Methacrylsäure;
ii) Polymerisieren der (Meth)acrylzusammensetzung MC1.

15. Polymerverbundmaterial, erhalten durch ein Verfahren gemäß Anspruch 14.

16. Verwendung des Verbundmaterials gemäß Anspruch 15 bei Automobil- und Motorsportanwendungen, wie z.B. einem Druckgefäß, ballistischen und Verteidigungsanwendungen, marinen Anwendungen, Eisenbahn- und Transportanwendungen, Sport-, Freizeit- und Erholungsanwendungen, Kunst- und Unterhaltungsanwendungen, Luft- und Raumfahrtanwendungen, Bau- und Bautechnikanwendungen, Öl- und Gasanwendungen, erneuerbaren Anwendungen, wie z.B. Photovoltaikanwendungen und Windenergieanwendungen.

## Revendications

1. Composition (méth)acrylique MC1 comprenant,
a) 100 parties d'un sirop (méth)acrylique liquide comprenant
a1) entre 10 % en poids et 50 % en poids d'un polymère (méth)acrylique (P1), et
a2) entre 50 % en poids et 90 % en poids d'un monomère (méth)acrylique (M1) comprenant une seule fonction (méth)acrylique, et
b) entre 0,01 et 10 phr en poids d'un monomère (méth)acrylique (M2) comprenant au moins deux fonctions (méth)acryliques ;
c) entre 0,01 et 10 phr en poids d'un monomère (méth)acrylique (M3) comprenant une seule fonction (méth)acrylique et le monomère (méth)acrylique (M3) étant différent du monomère (méth)acrylique (M1) ;
d) de 0 phr à 10 phr en poids d'un composé contenant un métal ;
e) de 0 phr à 10 phr en poids d'un agent réducteur
f) de 0 ppm et 20 000 ppm d'une amine tertiaire ;
g) de 0 phr à 5 phr d'un amorceur pour démarrer la polymérisation des monomères (méth)acryliques (M1), (M2) et (M3) ;
h) de 0 ppm à 10 000 ppm d'un agent de transfert ;
i) de 0 ppm à 10 000 ppm d'un antioxydant ;
j) de 0 ppm à 1,000 ppm d'un désactiveur de radicaux ;
k) de 0 ppm à 10 000 ppm d'un agent thermostabilisant et
l) de 0 ppm à 10 000 ppm d'un photostabilisant ;
m) facultativement une charge inorganique ;
**caractérisée en ce que** le monomère (méth)acrylique (M3) est choisi parmi l'acide méthacrylique.

2. Composition (méth)acrylique MC1 selon la revendication 1, **caractérisée en ce que** le monomère (méth)acrylique (M2) est choisi parmi le diméthacrylate de 1,3-butylèneglycol ; le diméthacrylate de 1,4-butanediol ; le diacrylate de 1,6-hexanediol ; le diméthacrylate de 1,6-hexanediol ; le diméthacrylate de diéthylèneglycol ; le diacrylate de dipropylèneglycol ; le diacrylate de bisphénol A éthoxylé (10) ; le diméthacrylate de bisphénol A éthoxylé (2) ; le diacrylate de bisphénol A éthoxylé (3) ; le diméthacrylate de bisphénol A éthoxylé (3) ; le diacrylate de bisphénol A éthoxylé (4) ; le diméthacrylate de bisphénol A éthoxylé (4) ; le diméthacrylate de bisphénol A éthoxylé ; le diméthacrylate de bisphénol éthoxylé (10) ; le diméthacrylate d'éthylèneglycol ; le diacrylate de polyéthylèneglycol (200) ; le diacrylate de polyéthylèneglycol (400) ; le diméthacrylate de polyéthylèneglycol (400) ; le diméthacrylate de polyéthylèneglycol (400) ; le diacrylate de polyéthylèneglycol (600) ; le diméthacrylate de polyéthylèneglycol (600) ; le diacrylate de polyéthylèneglycol 400 ; le diacrylate de néopentylglycol propoxylé (2) ; le diacrylate de tétraéthylèneglycol ; le diméthacrylate de tétraéthylèneglycol ; le diacrylate de tricyclodécanediméthanol ; le diméthacrylate de tricyclodécanediméthanol ; le diacrylate de triéthylèneglycol ; le diméthacrylate de triéthylèneglycol ; le diacrylate de tripropylèneglycol ; le triacrylate de triméthylolpropane éthoxylé (15) ; le triacrylate de triméthylolpropane éthoxylé (3) ; le triacrylate de triméthylolpropane éthoxylé (6) ; le triacrylate de triméthylolpropane éthoxylé (9) ; le triacrylate de pentaérythritol éthoxylé 5 ; le triacrylate de triméthylolpropane éthoxylé (20) ; le triacrylate de glycéryle propoxylé (3) ; le triacrylate de triméthylolpropane ; le triacrylate de glycéryle propoxylé (5.5) ; le triacrylate de pentaérythritol ; le triacrylate de glycéryle propoxylé (3) ; le triacrylate de triméthylolpropane propoxylé (3) ; le triacrylate de triméthylolpropane ; le triméthacrylate de triméthylolpropane ; le triacrylate d'isocyanurate de tris(2-hydroxyéthyle) ; le tétraacrylate de ditriméthylolpropane ; le pentaacrylate de dipentaérythritol ; le tétraacrylate de pentaérythritol éthoxylé (4) ; le tétraacrylate de pentaérythritol ; l'hexaacrylate de dipentaérythritol ; le diacrylate de 1,10-décanediol ; le diacrylate de 1,3-butylèneglycol ; le diacrylate de 1,4-butanediol ; le diacrylate de 1,9-nonanediol ; l'acrylate de 2-(2-vinyloxyéthoxy)éthyle ; le diacrylate de 2-butyl-2-éthyl-1,3-propanediol ; le diacrylate de 2-méthyl-1,3-propanediol ; l'éthoxyacrylate de 2-méthyl-1,3-propanediyle ; le diacrylate de 3-méthyl-1,5-pentanediol ; le diacrylate de cyclohexanediméthanol alcoxylé ; le diacrylate d'hexanediol alcoxylé ; le diacrylate de cyclohexanediméthanol ; le diacrylate de cyclohexanediméthanol éthoxylé ; le diacrylate de diéthylèneglycol ; le diacrylate de dioxaneglycol ; l'hexaacrylate de dipentaérythritol éthoxylé ; le triacrylate de glycérol éthoxylé ; le diacrylate de néopentylglycol éthoxylé ; le diacrylate d'hydroxypivalate d'hydroxypivalyle ; le diacrylate de néopentylglycol ; le diacrylate de poly(tétraméthylèneglycol) ; le diacrylate de polypropylèneglycol 400 ; le diacrylate de polypropylèneglycol 700 ; le diacrylate de bisphénol A éthoxylé propoxylé (6) ; le diacrylate d'éthylèneglycol propoxylé ; le tétraacrylate de pentaérythritol propoxylé (5) ; et le triacrylate de triméthylolpropane propoxylé.

3. Composition (méth)acrylique MC1 selon la revendication 1, **caractérisée en ce que** le monomère (méth)acrylique (M2) est choisi parmi le diméthacrylate d'éthylèneglycol, le diacrylate de néopentylglycol, le diméthacrylate de néopentylglycol, le diméthacrylate de 1,4-butanediol, le diacrylate de 1,4-butanediol, le diacrylate de 1,3-butylèneglycol, le diméthacrylate de 1,3-butylèneglycol, le diméthacrylate de triéthylèneglycol et le diacrylate de triéthylèneglycol.

4. Composition (méth)acrylique MC1 selon la revendication 1, **caractérisée en ce que** le monomère (méth)acrylique (M1) est choisi parmi des monomères acryliques alkyliques, des monomères méthacryliques alkyliques, des monomères acryliques hydroxyalkyliques et des monomères méthacryliques hydroxyalkyliques, et des mélanges correspondants, le groupe alkyle étant éventuellement linéaire, ramifié ou cyclique et contenant de 1 à 22 atomes de carbone, de préférence de 1 à 12 atomes de carbone.

5. Composition (méth)acrylique MC1 selon l'une quelconque des revendications 1 à 4, **caractérisée en ce que** l'agent réducteur e) est choisi parmi au moins un composés suivants : l'acide ascorbique, la saccharine, des α-hydroxysulfones ou des thiourées ou des mélanges de ceux-ci.

6. Composition (méth)acrylique MC1 selon l'une quelconque des revendications 1 à 5, **caractérisée en ce que** le métal du composé contenant un métal d) est un métal de transition choisi parmi la quatrième période du système périodique des éléments et de préférence, le métal est choisi parmi le fer, le cuivre et le manganèse, ou des mélanges de ceux-ci.

7. Composition (méth)acrylique MC1 selon la revendication 1,
**caractérisée en ce que** le composé peroxyde est un hydroperoxyde choisi parmi : l'hydroperoxyde de tertbutyle, le monohydroperoxyde, le para-méthane-hydroperoxyde, l'hydroperoxyde de tert-amyle et l'hydroperoxyde de cumène.

8. Composition (méth)acrylique MC1 selon l'une quelconque des revendications 1 à 7, **caractérisée en ce que** le sirop (méth)acrylique liquide comprend
a1) entre 10 % en poids et 30 % en poids d'un polymère (méth)acrylique (P1), et
a2) entre 70 % en poids et 90 % en poids d'un monomère (méth)acrylique (M1) comprenant une seule fonction (méth)acrylique.

9. Composition (méth)acrylique MC1 selon l'une quelconque des revendications 1 à 8, **caractérisée en ce que** la composition (méth)acrylique MC1 comprend entre 0,01 phr en poids et 10 phr en poids, plus préférablement entre 0,1 phr en poids et 2 phr et encore plus préférablement entre 0,1 phr en poids et 1 phr en poids de l'agent réducteur.

10. Composition (méth)acrylique selon l'une quelconque des revendications 1 à 9, **caractérisée en ce que** le monomère (méth)acrylique (M2) est présent dans la composition (méth)acrylique MC1 entre 0,01 et 9 phr et est choisi parmi un composé comprenant deux fonctions (méth)acryliques ou un mélange de composés comprenant deux fonctions (méth)acryliques.

11. Procédé de préparation d'une composition (méth)acrylique MC1 selon l'une quelconque des revendications 1 à 10 comprenant les étapes suivantes :
i) fourniture des composants suivants :
a) a (méth)acrylique polymère (Pl) et un monomère (méth)acrylique (M1) comprenant une seule fonction (méth)acrylique
b) un monomère (méth)acrylique (M2) comprenant au moins deux fonctions (méth)acryliques
c) un monomère (méth)acrylique (M3) comprenant une seule fonction (méth)acrylique et le monomère (méth)acrylique (M3) étant différent du monomère (méth)acrylique (M1), **caractérisé en ce que** le monomère (méth)acrylique (M3) est choisi parmi l'acide méthacrylique
ii) mélange des composants a) à c).

12. Utilisation de la composition (méth)acrylique MC1 selon l'une quelconque des revendications 1 à 10 ou préparée par le procédé selon la revendication 11, pour imprégner un substrat fibreux.

13. Utilisation de la composition (méth)acrylique MC1 selon l'une quelconque des revendications 1 à 10 ou préparée par le procédé selon la revendication 11, pour préparer une composition polymère (méth)acrylique.

14. Procédé de préparation d'un composite polymère à partir d'une composition (méth)acrylique MC1, ledit procédé comprenant les étapes suivantes :
i) imprégnation d'un substrat fibreux avec une composition (méth)acrylique MC1 comprenant :
a) 100 parties d'un sirop (méth)acrylique liquide comprenant
a1) entre 10 % en poids et 50 % en poids d'un polymère (méth)acrylique (P1),
a2) entre 50 % en poids et 90 % en poids d'un monomère (méth)acrylique (M1) comprenant une seule fonction (méth)acrylique, et
b) entre 0,01 et 10 phr en poids d'un monomère (méth)acrylique (M2) comprenant au moins deux fonctions (méth)acryliques ;
c) entre 0,01 et 10 phr en poids d'un monomère (méth)acrylique (M3) comprenant une seule fonction (méth)acrylique et le monomère (méth)acrylique (M3) étant différent du monomère (méth)acrylique (M1) ;
d) de 0 phr à 10 phr en poids d'un composé contenant un métal ;
e) de 0 phr à 10 phr en poids d'un agent réducteur
f) de 0 ppm et 20 000 ppm d'une amine tertiaire ;
g) de 0 phr à 5 phr d'un amorceur pour démarrer la polymérisation des monomères (méth)acryliques (M1), (M2) et (M3) ;
h) de 0 ppm à 10 000 ppm d'un agent de transfert ;
i) de 0 ppm à 10 000 ppm d'un antioxydant ;
j) de 0 ppm à 1,000 ppm d'un désactiveur de radicaux ;
k) de 0 ppm à 10 000 ppm d'un agent thermostabilisant et
l) de 0 ppm à 10 000 ppm d'un HALS
m) facultativement une charge inorganique ; **caractérisé en ce que** le monomère (méth)acrylique (M3) est choisi parmi l'acide méthacrylique
ii) polymérisation de la composition (méth)acrylique MC1.

15. Matériau composite polymère matériau obtenu à partir d'un procédé selon la revendication 14.

16. Utilisation du matériau composite selon la revendication 15 dans des applications automobiles et de sports mécaniques telles que, par exemple, une cuve sous pression, des applications balistiques et de défense, des applications dans le domaine de la marine, des applications ferroviaires et de transport, des applications de sport, de loisirs et des activités récréatives, des applications dans le domaine de l'art et du divertissement, des applications aéronautiques et aérospatiales, des applications dans le domaine de la construction et du génie civil, des applications dans le domaine du pétrole et du gaz, des applications dans le domaine des industries renouvelables telles que des applications photovoltaïques et des applications dans le domaine de l'énergie éolienne.
